## Europäisches Patentamt

## European Patent Office

## Office européen des brevets

(19)

(11) Veröffentlichungsnummer: **0 033 158**
**A1**

(12) **EUROPÄISCHE PATENTANMELDUNG**

(21) Anmeldenummer: 81100605.5

(22) Anmeldetag: 28.01.81

(51) Int. Cl.³: **B 29 F 3/00**
**B 29 F 3/02, B 29 F 3/04**

(30) Priorität: 01.02.80 DE 3003614

(43) Veröffentlichungstag der Anmeldung:
05.08.81 Patentblatt 81/31

(84) Benannte Vertragsstaaten:
AT CH DE FR GB IT LI NL SE

(71) Anmelder: HERMANN BERSTORFF Maschinenbau GmbH
An der Breiten Wiese 3/5
D-3000 Hannover 61(DE)

(72) Erfinder: Anders, Dietmar, Ing. grad
Lauenburger Hof 13
D-3000 Hannover 61(DE)

(54) Vorrichtung zum kontinuierlichen Verarbeiten von vulkanisier- bzw. vernetzbarem Kautschuk, Elastomeren bzw. Kunststoffen.

(57) Mittels der Einrichtung wird die Einleitung eines Vulkanisations- bzw. Vernetzungsvorganges für ein mittels eines Extruders (1) gespritztes Profil aus Kautschuk oder Kunststoff bereits im dafür vorgesehenen, den Extruder unmittelbar nachgeschalteten Maschinenteil (2) ermöglicht. Dadurch, daß ein Dorn (35) axial vor der Schnecke (4) angeordnet und drehfest mit der Schneckenspitze verbunden ist und ein den Dorn umgebender Mantel (15, 16) entgegen der Drehrichtung des Dornes drehbar ausgebildet und die Drehzahl stufenlos einstellbar ist, wird der Vulkanisations- bzw. Vernetzungsvorgang bereits an dieser Stelle eingeleitet. Das zu vulkanisierende Profil wird in dem dem Extruder unmittelbar nachgeschalteten Maschinenteil bereits auf seine Vulkanisationstemperatur gebracht, so daß das aus dem Profilkopf (8-11) austretende Profil in nachgeschalteten Wärmekanälen nur noch für eine bestimmte Zeit auf diese Temperatur gehalten werden muß, um den Vulkanisations- bzw. Vernetzungsvorgang abzuschließen.

./...

EP 0 033 158 A1

Hannover, den 26. Jan. 1981
by/zu     338

- 1 -

Vorrichtung zum kontinuierlichen Verarbeiten
von vulkanisier- bzw. vernetzbaren Kautschuk,
Elastomeren bzw. Kunststoffen.

Die Erfindung betrifft eine Vorrichtung zum kontinuierlichen Verarbeiten von vulkanisier- bzw. vernetzbaren
Kautschuk, Elastomeren bzw. Kunststoffen, wobei die
Vulkanisierung bzw. Vernetzung des in einem Extruder
aufbereiteten Materials durch eine Relativbewegung von
Maschinenteilen eingeleitet wird, die aus einem drehenden Dorn und einem den Dorn im Abstand koaxial umgebenen
Mantel bestehen.

Aus der DE-OS 23 08 284 sind Extrudern nachgeschaltete
Scherteile bekannt, die zwecks Temperaturerhöhung und
Einleitung der Vernetzung mechanische Kräfte auf z.B.
Elastomere einwirken lassen, deren Größe während des
laufenden Verfahrensbetriebes unabhängig von einem vorgegebenen Mengenstrom variiert werden kann. Die mechanischen Kräfte werden in das Material eingeleitet durch
eine Relativbewegung von Maschinenteilen, d.h. durch einen
sich drehenden Dorn und einem stehenden Mantel bzw.
durch einen stehenden Dorn und einen sich drehenden
Mantel.

Die auf eine solche Weise in das zu verarbeitende Material
eingeleiteten mechanischen Kräfte in Form von Scherenergie werden zur Einleitung des Vulkanisier- bzw. Vernetzungsvorganges herangezogen. Mit derartigen Einrichtungen wird das Ziel verfolgt, die Vulkanisier- bzw. Vernetzungstemperatur bereits dann in dem Material einzuleiten, wenn dieses das Formwerkzeug beispielsweise
einen Profilkopf oder einen Rohrkopf verläßt. Eine derartige Verfahrensweise hat den Vorteil, daß der Aufheiz-vorgang für die Vernetzung bzw. Vulkanisierung erheblich reduziert werden kann. Da das aus dem Werkzeug austretende Material bereits die Vernetzungs- bzw. Vulkanisiertemperatur aufweist, ist nur noch eine Einrichtung erforderlich, die diese Temperatur während einer bestimmten Zeit aufrechterhält. Zu diesem Zweck werden üblicherweise mit Warmluft gespeiste längliche Kanäle eingesetzt, die mit einem Transportband für die Aufnahme des aus dem Werkzeug austretende Materialstranges ausgerüstet sind.

Durch derartige Einrichtungen werden somit komplizierte Mikrowellenvulkanisieranlagen bzw. Salzbadvulkanisieranlagen entbehrlich.

Die in der genannten Offenlegungsschrift offenbarte Einrichtung ist jedoch mit erheblichen Mängeln behaftet. Der größte Nachteil einer derartigen Einrichtung besteht darin, daß ein erheblicher Druckverlust im Werkzeug hingenommen werden muß, weil davon ausgegangen wurde, daß eine Durchmesserreduzierung des Aufbereitungsteils gegenüber dem Extruder notwendig ist, um einen entsprechenden Druckverlust und eine entsprechende Temperaturerhöhung zu erzielen. Durch diese Durchmesserredu-zierung erfolgt eine unkontrollierte Aufheizung des zu verarbeitenden Materials, wodurch eine präzise Einhaltung der Vernetzungs- bzw. Vulkanisiertemperatur unmöglich gemacht wird.

Da die Ausstoßzonen üblicher Entgasungsextruder nur einen relativ geringen Werkzeugdruck aufbauen können, ohne daß die Entgasungszone überflutet, müssen für die beschriebene Einrichtung wesentlich längere Ausstoßzonen und somit längere und teuere Extruder verwendet werden.

Soll das Vulkanisier- bzw. Vernetzungsteil gem. obiger Offenlegungsschrift ohne eine Verlängerung des Extruders, also mit vorhandenen normalen Entgasungsextrudern kombiniert werden, so muß außer dem Vulkanisier- bzw. Vernetzungsteil mindestens noch eine neue Schnecke mit erheblich gedrosselter Ausstoßleistung pro Umdrehung beschafft werden, damit die Ausstoßzone den hohen Gegendruck der bekannten Vulkanisier- bzw. Vernetzungseinrichtung ohne Überflutung der Entgasungszone aufbauen kann. Eine Überflutung der Entgasungszone würde jegliche Entgasung der zu verarbeitenden Materialien sofort unmöglich machen, weil durch die Überflutung die Entgasungsleitungen sofort zugesetzt würden.

Darüber hinaus ist es von der Betriebsweise der Extruder für die Kabelummantelung, die mit Querkopf und damit ebenfalls mit hohem Widerstand und bei hohem Spritzdrücken arbeiten bekannt, daß infolge der hohen Drücke eine Rückströmung im Schneckengang auftritt, wodurch sehr hohe Temperaturen im Material entstehen und wodurch somit Anvulkanisationen hervorgerufen werden, die ein Extrudieren maßhaltiger Profilquerschnitte unmöglich machen.

Die Einrichtung gemäß dieser Offenlegungsschrift offenbart darüber hinaus keine Hilfsmittel, um eines der größten Probleme der Aufbereitungsteile, nämlich das Abdichtungsproblem, zu lösen. Da in dem Vulkanisier- bzw. Vernetzungsteil ein relativ hoher Druck herrscht und darüber hinaus sich drehende Teil vorhanden sind, entstehen hinsichtlich der Abdichtung erhebliche Schwierigkeiten. Es muß gewährleistet sein, daß kein Material in den Antriebsteil für den sich drehenden Mantel bzw. in die Lagerung und die Temperiereinrichtung des Mantels eindringen kann.

0033158

Die Aufgabe der vorliegenden Erfindung besteht somit darin, eine Vorrichtung zu schaffen, die die Einleitung des Vulkanisations- bzw. Vernetzungsvorganges bereits im dafür vorgesehenen Maschinenteil ermöglicht, ohne daß ein nachteiliger erhöhter Druckverlust und somit eine kaum kontrollierbare Temperaturverteilung und eine örtliche Anvulkanisation in den Schneckengängen der Ausstoßzone auftritt.

Weiterhin soll der Druckverlust eines derartigen Vulkanisier- bzw. Vernetzungsteils zur Einleitung des Vulkanisations- bzw. Vernetzungsvorganges erheblich reduziert werden, damit vorhandene Extruder benutzt werden können und eine hohe Ausstoßleistung pro Schneckenumdrehung ermöglicht wird.

Darüber hinaus muß sichergestellt sein, daß kein Material in den Antriebsteil, der Lagerung für den Mantel und in die Temperiereinrichtung des Mantels eindringen und dort vulkanisieren kann.

Die erfindungsgemäße Aufgabe wird gelöst durch die in den Ansprüchen niedergelegte Lehre.

Dadurch, daß der Dorn mindestens Schneckendurchmesser aufweist und axial vor der Schnecke angeordnet und mit dieser drehfest verbunden ist, wird der Druckverlust trotz gegenüber der Schnecke reduzierter Gangtiefe im Vulkanisier- bzw. Vernetzungsteil erheblich reduziert. Die Reduzierung des im Extruderzylinder vorgegebenen freien Querschnitts kann deshalb gering gehalten werden.

Durch eine Profilierung des Dornes mit abgerundeten Stegen größerer positiver Steigung, die jedoch gegenüber der Gehäusewand immer noch ein wesentlich größeres Schneckenspiel haben, kann der Druckverlust weiter reduziert und eine Selbstreinigung des Vulkanisier- bzw. Vernetzungsteiles nach Ausbau des Werkzeuges erreicht werden.

Ein besonderer Vorteil ergibt sich aus der erfindungsgemäßen Konstruktion dadurch, daß nach Ausbau der Formmatrize ohne weiteren Abbau von Spritzköpfen die Schnecke einschließlich des Vulkanisier- bzw. Vernetzungsteiles zwecks Inspektion und gegebenenfalls Reinigung aus dem Extruderzylinder herausgezogen werden kann.

Insbesondere ist jedoch von großer Bedeutung, daß keine Umlenkung des Materialflusses erforderlich ist, da das Vulkanisier- bzw. Vernetzungsteil in Förderrichtung der Schnecke angeordnet ist. Durch eine Umlenkung einer hochviskosen Masse entsteht ein erheblicher Druckverlust und somit eine unkontrollierbare Temperaturbeeinflussung des Materials.

Die drehfeste Anordnung des Dornes an der Schneckenspitze erlaubt eine intensive Temperierung des Vulkanisier- bzw. Vernetzungsteiles und garantiert einen strömungsgünstigeren Übergang - ohne tote Ecken - der Gummimischung von der Ausstoßzone der Schnecke mit möglichst niedriger Scherung in den intensiv temperierten Teil hoher kontrollierter Scherung.

Dadurch, daß der Mantel entgegen der Drehrichtung des Dornes drehbar und in seiner Drehzahl stufenlos einstellbar ist, sind hohe und sehr kontrollierte Relativ-

0033158

bewegungen zwischen dem Dorn und dem Mantel möglich und somit eine gezielte Temperaturbeeinflussung und -steuerung des Materials.

Ferner können die Drehzahl des Mantels und die Schneckendrehzahl niedriger gehalten werden, da auch bei Manteldrehzahl "Null" eine Grundscherung entsprechend der Schneckendrehzahl erfolgt. Der Wirkungsgrad der Einrichtung wird hierdurch erheblich verbessert.

Durch die Anordnung eines zylinderförmigen Eingangs-Adapters zwischen dem Extruderzylinder und dem gegensinnig drehbar ausgebildeten Mantel mit daran angeformten in den drehenden Mantel hineinragenden zylinderförmigen Dichtlippen, wird infolge des Innendrucks eine ausgezeichnete Abdichtung gegenüber dem Antrieb, den Lagern und der Temperiereinrichtung des Mantels sichergestellt. Da auch der vordere Teil des Mantels mit einem entsprechenden Ausgangs-Adapter ausgerüstet ist, erfolgt auch an dieser Stelle eine unübertroffene Abdichtung. Dabei ist es insbesondere von Bedeutung, daß ein eventuell auftretender Verschleiß der sich drehenden Teile nicht zu einer Undichtigkeit führen kann. Aus diesem Grunde rotieren die an den Adaptern angeformten Dichtlippen auf einem bündig mit dem Mantel abschließenden zylinderförmigen Verschleißring. In dem Verschleißring sind eine oder mehrere Ringnuten eingebracht, in die eventuell durchtretendes Material aufgefangen wird und wodurch somit die Abdichtwirkung noch erhöht wird. Verfahrenstechnisch ist von besonderer Wichtigkeit, daß das Material beim Durchtritt durch das Vulkanisier- bzw. Vernetzungsteil nicht in Richtung der Dichtspalte fließt, was zu einer örtlich verlängerten Verweilzeit und damit zu einer Vulkanisation führen würde.

- 7 -

Um eine gleichmäßige und rasch steuerbare Temperierung des Mantels zu gewährleisten, besteht der Mantel aus einem Innen- und Außenmantel, wobei in den Innenmantel wendelförmige Temperierkanäle eingebracht und mit dem Außenmantel abgedeckt werden. In den Außenmantel wurde jeweils eine Zu- und Ablaufbohrung eingebracht, die wiederum mit Ringnuten in einem feststehenden, den Außenmantel umgebenen zylinderförmigen Dichtungsträger in Verbindung stehen und für den Zu- und Ablauf des Temperiermediums vorgesehen sind.

Eine vorteilhafte Art, den Mantel entgegen der Drehrichtung des Dornes drehbar und mit stufenloser Geschwindigkeit anzutreiben, besteht darin, auf den Außenmantel eine Außenverzahnung anzuordnen, die mit einem Ritzel, einer Antriebseinheit zusammenwirkt. Vorteilhafterweise werden zwei gegenüber angeordnete Antriebseinheiten angeordnet, da sich dann keine Radialkräfte auf die Lager ergeben. Zwischen der Extruderschnecke und dem Dorn ist ein sich dornseitig konisch erweiterndes Übergangsteil mit darauf angeordneten Förderstegen vorgesehen, wodurch eine gleichmäßige Verteilung des Materials zwischen Dorn und Mantel ohne bemerkenswerten Druckverlust sichergestellt wird.

Es hat sich ebenfalls gezeigt, daß es sehr vorteilhaft ist, auch den Dorn temperierbar zu gestalten, um eine noch genauere Temperaturführung im Aufbereitungsteil zu erreichen.

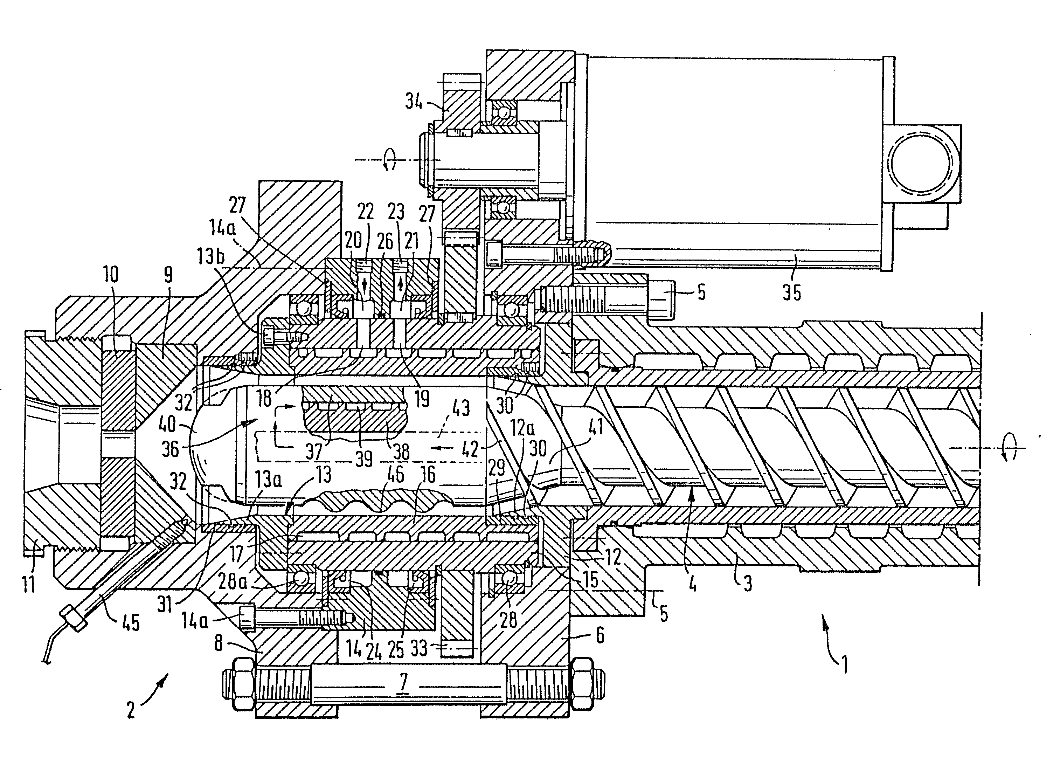

Ein Ausführungsbeispiel der Erfindung wird anhand der Zeichnung beschrieben.

Mit (1) wird ein Extruderteil bezeichnet und mit (2) das dem Extruderteil nachgeschaltete Vulkanisier- bzw. Vernetzungsteil. Extruderteil (1) besteht aus einem Extruderzylinder (3) und einer Extruderschnecke (4). Grundplatte (6) des Vulkanisier- bzw. Vernetzungsteil ist mittels Schrauben (5) an Extruderzylinder (3) angeflanscht. Grundplatte (6) ist mittels Schraubbolzen (7) mit der Kopfplatte (8) verschraubt.

Die Kopfplatte (8) nimmt einen Einsatz (9) auf, der vor der Profilscheibe (10) angeordnet ist und mittels einer Verschraubung (11) fixiert wird.

Zwischen dem Extruderzylinder (3) und dem drehbaren Mantel (15, 16) ist Eingangsadapter (12) angeordnet, mit daran angeformten Dichtlippen (12a). An dem Außenmantel (15) ist der Ausgangsadapter (13) angeschraubt, an dem ebenfalls Dichtlippen (13a) angeformt sind.

Der drehbar ausgebildete Mantel besteht aus einem Außenmantel (15) und einem Innenmantel (16). In dem Innenmantel (16) sind wendelförmige Temperierkanäle (17) eingebracht, die einen Temperiermediumkreislauf ermöglichen. Zu diesem Zweck sind die Temperierkanäle (17) mit einer durch den Außenmantel (15) durchführenden Zulaufbohrung (18), einer Ringnut (20) und einen Zulauf (22) für das Temperiermedium verbunden.

Die im Außenmantel (15) eingebrachte Ablaufbohrung (19) steht mit der Ringnut (21) und dem Ablauf (23) in Verbindung, um ein kontinuierliches Umlaufen des Temperiermediums sicherzustellen.

Die Abdichtung der Ringnuten (20) und (21) erfolgt durch Dichtungen (24, 25, 26) , die von dem feststehenden zylinderförmigen Dichtungsträger (14) gehalten werden. Dichtungsträger (14) ist mittels Schrauben (14a) an die Grundplatte (8) geschraubt.

Dichtungen (24) und (25) werden durch Halteplatten (27) in ihrer Position gehalten.

Der aus dem Außen- und Innenmantel (15)und (16) bestehende Mantel wird mittels eines Festlagers (28) und eines Loslagers (28a) gelagert.

Um eventuell auftretende Verschleißerscheinungen durch den sich drehenden Mantel (14, 15) auf ein bestimmtes Teil zu beschränken, wurde in dem Innenmantel (16) und bündig mit diesem abschließend ein zylinderförmiger Verschleißring (29) vorgesehen. In dem Verschleißring (29) sind Ringnuten (30) eingebracht, die eventuell eindringendes Material auffangen. Die mit Material gefüllten Ringnuten (30) erhöhen die Abdichtwirkung.

Ausgangsadapter (13) ist mittels Schrauben (13b) mit dem Außenmantel (15) verschraubt und rotiert mit diesem. Die Dichtlippen (13a) des Ausgangsadapters (13) rotieren auf einem Verschleißring (31), in dem ebenfalls Ringnuten (32) eingebracht sind. Auch diese Ringnuten nehmen eventuell eindringendes Material auf und erfüllen dann eine zusätzliche Abdichtfunktion.

Auf dem Außenmantel (15) ist eine Außenverzahnung (33) mittels einer Paßfeder angeordnet, die mit einem Antriebsritzel (34) in Verbindung steht. Antriebsritzel (34) wird von einer Antriebseinheit (35) in Drehbewegung versetzt.

In dem Vulkanisier- und Vernetzungsteil (2) ist der Dorn (36) angeordnet, der über ein konisches Übergangsteil (41) mit der Schnecke (4) drehfest verbunden ist.

Der Dorn selbst besteht aus einem Dornmantel (37) und einem Dornkern (38).* In dem Dornkern (38) sind wendelförmige Temperierkanäle (39) eingebracht, die durch den Dornmantel (37) abgedeckt werden. Ein flüssiges Temperiermedium gelangt durch den Vorlauf 43 in die wendelförmigen Kanäle (39) und wird von hier aus in üblicher bekannter Weise zurückgeführt.

Mit (45) wird ein Temperaturfühler bezeichnet. Aufgrund der gemessenen Temperaturwerte wird die Drehzahl des Mantels (14, 15) gesteuert, d.h. wenn die Temperatur zu niedrig ist, wird die Drehzahl hochgeregelt, um eine größere Relativbewegung zwischen dem drehenden Dorn und dem gegensinnig drehenden Mantel zu erreichen und um somit eine Erhöhung der Temperatur sicherzustellen. Außerdem wird zu einer exakten Temperatursteuerung die Temperierung des Mantels (15, 16) mittels einen umlaufenden Temperiermediums sowie des Dornes (36) mit herangezogen. Zu diesem Zweck können weitere Temperaturfühler im Dorn selbst bzw. an anderen Stellen des Vulkanisier- bzw. Vernetzungsteiles angeordnet sein. Die mittels der Temperaturfühler gewonnenen Werte werden entsprechend gemittelt und es erfolgt aufgrund dessen eine Einwirkung auf die Drehzahl des rotierenden Mantels (15, 16) bzw. auf die Temperatursteuerung des Mantels und des Dornes.

Die Funktionsweise der erfindungsgemäßen Vorrichtung folgendermaßen:

* und einen Abschlußkopf 40

Das im Extruderteil (1) aufbereitete Material wird mittels der Schnecke (4) in das Vulkanisier- bzw. Vernetzungsteil (2) gefördert. Das konische Übergangsteil (41) mit den darauf angeordneten Förderstegen (42) verteilt das zu vulkanisierende bzw. zu vernetzende Material gleichmäßig auf den Dornumfang. Entsprechend der von Temperaturfühler (45) gemessenen Werte wird die Drehzahl des rotierenden Mantels (15, 16) eingeregelt, d.h. das zu vulkanisierende oder zu vernetzende Material wird mittels der Manteldrehzahl und des den Mantel und den Dorn temperierenden Mediums auf eine solche Temperatur gebracht, die ein Einleiten des Vulkanisierens bzw. Vernetzen sicherstellt.

Damit ein Anvulkanisieren im Wandbereich, in dem das Material länger verweilt als in der Mitte des Fließkanals unterbleibt, ist es vorteilhaft, die Temperaturen von Mantel, Dorn und Kopfplatte unter der Vulkanisiertemperatur bzw. Masseaustrittstemperatur zu halten.

Während der Einleitungsphase des Vulkanisierens ist das Material noch plastisch und kann verformt werden in einem sich anschließenden Werkzeug. Gemäß der Zeichnung wird dies Werkzeug aus dem Einsatz (9) der Profilscheibe (10) und der Verschraubung (11) gebildet. Die Temperatur des Materials in dem Vulkanisier- bzw. Vernetzungsteil muß so gesteuert werden, daß der aus der Profilscheibe (10) austretende Materialstrang die jeweilige Vernetzungs- bzw. Vulkanisiertemperatur aufweist. Der Strang wird dann beispielsweise einem länglichen Heizkanal zugeführt, in dem ein umlaufendes Transportband für die Aufnahme des Stranges angeordnet ist. In diesem Wärmekanal braucht nun lediglich noch die einmal in dem Strang vorhandene

Temperatur während einer bestimmten Zeit eingehalten zu werden. Nachdem das Material einen derartigen Wärmekanal verlassen hat, ist es ausvulkanisiert und kann gekühlt und aufgewickelt werden. Eine weitere Vulkanisierung in speziell für diese Zwecke vorgesehene Einrichtungen wie beispielsweise Mikrowellenvulkanisier- oder sonstige Anlagen ist nicht mehr notwendig.

Weiterhin wird an dem Dorn (36) in der Zeichnung an der unteren Seite gezeigt, daß eine alternative Gestaltung mit einer Profilierung mit abgerundeten Stegen (46) größerer positiver Steigung von beispielsweise eines Winkels von 30 - 60°, gemessen zwischen einer Senkrechten und der Dornachse möglich ist. Durch diese angedeutete alternative Dorngestaltung wird der Druckverlust weiter reduziert und es wird eine Selbstreinigung des Vulkanisier- bzw. Vernetzungsteiles (2) erreicht, weil die Stege (46) eine Materialförderung bewirken.

- 13 -                                     0033158

BEZUGSZEICHENLISTE
=======================================

1 = Extruderteil
2 = Vulkanisier- bzw. Vernetzungsteil
3 = Extruderzylinder
4 = Extruderschnecke
5 = Schrauben
6 = Grundplatte
7 = Schraubbolzen
8 = Kopfplatte
9 = Einsatz
10 = Profilscheibe
11 = Verschraubung
12 = Eingangsadapter
12a = Dichtlippen
13 = Ausgangsadapter
13a = Dichtlippen
13b = Schrauben
14 = zylinderförmiger Dichtungsträger
14a = Schraube für zylinderförmigen Dichtungsträger
15 = Außenmantel
16 = Innenmantel
17 = Temperierkanäle
18 = Zulaufbohrung
19 = Ablaufbohrung
20 = Ringnut
21 = Ringnut
22 = Zulauf
23 = Ablauf
24 = Dichtungen
25 = Dichtungen
26 = Dichtungen
27 = Halteplatte

| 28 | = | Festlager |
|---|---|---|
| 28a | = | Loslager |
| 29 | = | Verschleißring |
| 30 | = | Ringnuten |
| 31 | = | Verschleißring |
| 32 | = | Ringnuten |
| 33 | = | Außenverzahnung |
| 34 | = | Antriebsritzel |
| 35 | = | Antriebseinheit |
| 36 | = | Dorn |
| 37 | = | Dornmantel |
| 38 | = | Kern / Dornkern |
| 39 | = | wendelförmige Temperiernuten |
| 40 | = | Abschlußkopf |
| 41 | = | konisches Übergangsteil |
| 42 | = | Förderstege |
| 43 | = | Vorlauf |
| 45 | = | Temperaturfühler |
| 46 | = | wendelförmige Stege |

Unser Zeichen: 80/3 — 1. — Hannover, den 26. Jan. 1981
by/zu 338

P A T E N T A N S P R Ü C H E
====================================

1. Vorrichtung zum kontinuierlichen Verarbeiten von vulkanisier- bzw. vernetzbarem Kautschuk, Elastomeren bzw. Kunststoffen, wobei die Vulkanisierung bzw. Vernetzung des in einem Extruder aufbereiteten Materials durch eine Relativbewegung von Maschinenteilen eingeleitet wird, die aus einem drehenden Dorn und einem, den Dorn im Abstand koaxial umgebenden Mantel bestehen,

d a d u r c h   g e k e n n z e i c h n e t ,

daß der Dorn (36) axial vor der Schnecke (4) angeordnet und drehfest mit der Schneckenspitze verbunden ist und daß der Mantel (15, 16) entgegen der Drehrichtung des Dornes (36) drehbar und die Drehzahl stufenlos einstellbar ist.

2. Vorrichtung nach Anspruch 1

d a d u r c h   g e k e n n z e i c h n e t ,

daß der Dorn (36) etwa Schneckendurchmesser aufweist.

3. Vorrichtung nach Anspruch 1

d a d u r c h   g e k e n n z e i c h n e t ,

daß zwischen dem Extruderzylinder (3) und dem gegensinnig drehbar ausgebildetem Mantel (15,16) ein mit dem Extruderzylinder (3) verbundener zylinderförmiger Eingangs-Adapter (12) angeordnet ist, mit daran angeformten, in den drehenden Mantel hineinragenden zylinderförmigen Dichtlippen (12a).

4. Vorrichtung nach Anspruch 1 und 3

   d a d u r c h   g e k e n n z e i c h n e t ,

   daß die an den stehenden Eingangs-Adapter (12) angeformten Dichtlippen (12a) auf einem mit dem Innenmantel (16) rotierenden und bündig mit diesem abschließenden zylinderförmigen Verschleißring (29) angeordnet sind, in dem dichtlippenseitig ein oder mehrere Ringnuten (30) eingebracht sind.

5. Vorrichtung nach Anspruch 1

   d a d u r c h   g e k e n n z e i c h n e t ,

   daß an der Austrittsseite des rotierenden Mantels (15,16) ein zylinderförmiger Ausgangs-Adapter (13) befestigt ist mit daran angeformten zum Austritt zeigenden zylinderförmigen Dichtlippen (13a).

6. Vorrichtung nach Anspruch 1 und 5

   d a d u r c h   g e k e n n z e i c h n e t ,

   daß unter den rotierenden Dichtlippen (13a) des Ausgangs-Adapters (13) ein mit der Kopfplatte (8) verbundener zylinderförmiger Verschleißring (31) angeordnet ist, in dem dichtlippenseitig ein oder mehrere Ringnuten (32) eingebracht sind.

7. Vorrichtung nach Ansprüchen 3 bis 6

d a d u r c h  g e k e n n z e i c h n e t ,

daß der Innenmantel (16) und der Ausgangsadapter (13) mit den daran angeformten zum Austritt zeigenden zylinderförmigen Dichtlippen (13a) aus einem Stück ausgebildet sind.

8. Vorrichtung nach Anspruch 1

d a d u r c h  g e k e n n z e i c h n e t ,

daß der Mantel aus einem Innenmantel (16) mit außen darin eingebrachten wendelförmigen Temperierkanälen (17) und einem, die Temperierkanäle (17) abdeckenden koaxial auf dem Innenmantel (16) angeordneten und damit verschweißten Außenmantel (15) besteht, und daß durch den Außenmantel (15) jeweils eine Zulauf-(18) und Ablaufbohrung (19) eingebracht ist, die mit Ringnuten (20,21) in einem feststehenden den Außenmantel umgebenden zylinderförmigen Dichtungsträger (14) in Verbindung stehen, an denen der Zu- und Ablauf (22,23) für das Temperiermedium angeschlossen ist.

9. Vorrichtung nach Anspruch 1 und 8

d a d u r c h  g e k e n n z e i c h n e t ,

daß auf dem Außenmantel (15) eine Außenverzahnung (33) angeordnet ist, die mit einem Ritzel (34) einer oder mehrerer Antriebseinheiten (35) zusammenwirkt.

10. Vorrichtung nach Anspruch 1

d a d u r c h  g e k e n n z e i c h n e t ,

daß zwischen der Extruderschnecke (4) und dem Dorn (36) ein dornseitig sich konisch erweiterndes Übergangsteil (41) mit darauf angeordneten Förderstegen (42) vorgesehen wird.

11. Vorrichtung nach Anspruch 1

d a d u r c h  g e k e n n z e i c h n e t ,

daß der Dorn (36) temperierbar ausgebildet ist.

12. Vorrichtung nach Anspruch 1

d a d u r c h  g e k e n n z e i c h n e t ,

daß die Verschraubung (11), Profilscheiben (10) und Einsatz (9) demontierbar ausgebildet sind.

13. Vorrichtung nach Anspruch 1

d a d u r c h  g e k e n n z e i c h n e t ,

daß auf dem Dorn (36) beidseitig abgerundete Stege (46) angeordnet sind, die eine förderwirksame Steigung eines Winkels von 30 - 60° gemessen zwischen einer Senkrechten und der Dornachse aufweisen.

1/1

0033158

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - C3 - 2 054 616 (G. SCHENKEL) <br> * Spalte 5, Zeilen 15 bis 44 * <br> -- | 1-7,9 |
| | DE - B2 - 2 311 717 (THYSSEN PLASTIK ANGER KG) <br> * Anspruch 1 * <br> -- | 11 |
| | DE - A1 - 2 803 301 (SUSSEX PLASTICS ENGINEERING, INC.) <br> * Anspruch 1; Fig. 2 * <br> -- | 10,13 |
| A | DE - A - 2 118 273 (PAUL TROESTER MASCHINENFABRIK) <br> * Anspruch 1 * <br> -- | |
| A | DE - A - 1 779 944 (PAUL TROESTER MASCHINENFABRIK) <br> * Anspruch * <br> -- | |
| D,A | DE - A - 2 308 284 (FRIED. KRUPP GMBH) <br> * Ansprüche 1 bis 5 * <br> ---- | |

**KLASSIFIKATION DER ANMELDUNG (Int. Cl.³)**

B 29 F   3/00
B 29 F   3/02
B 29 F   3/04

**RECHERCHIERTE SACHGEBIETE (Int. Cl.³)**

B 29 F   3/00
B 29 G   2/00
B 29 H   3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 24-04-1981 | BITTNER |

EPA form 1503.1   06.78